# EUROPEAN PATENT SPECIFICATION

(11) **EP 4 117 411 B1**
(45) Date of publication and mention of the grant of the patent: **07.05.2025**
(21) Application number: 21709733.6
(22) Date of filing: 10.03.2021
(51) Int. Cl.: A01B 59/042, A01B 59/06

(54) **IMPROVED PICK-UP HITCH ASSEMBLY**
VERBESSERTE HUBWERKSEINHEIT
ATTELAGE AUTOMATIQUE AMÉLIORÉ

(30) Priority: 11.03.2020 IT 202000005251
(43) Date of publication of application: 18.01.2023
(73) Proprietor: CNH Industrial Italia S.p.A., 10156 Torino (IT)
(72) Inventor: CIARROCCHI, Marco Pietro, 64027 Sant'Omero (TE) (IT)
(74) Representative: CNH Industrial IP Department
(86) International application number: PCT/EP2021/056041
(87) International publication number: WO 2021/180783

(56) References cited:
- EP-A1- 2 832 199
- WO-A1-2012/084136
- US-A1- 2006 027 992

## Description

### TECHNICAL FIELD

The present invention concerns a pick-up hitch assembly for an agricultural vehicle, in particular a pick-up hitch assembly for a tractor.

### BACKGROUND OF THE INVENTION

Agricultural vehicle such as tractors are provided with connections means for allowing the connection of a trailer to the tractor. Indeed, tractor-trailer combinations are widely known and used for a plurality of different working operations both in the fields and on road.

The aforementioned connection means are usually provided in form of a pick-up hitch assembly. Such assembly may be realized in different known ways to define a connection between the tractor and the trailer as shown for example in WO2012/084136A1.

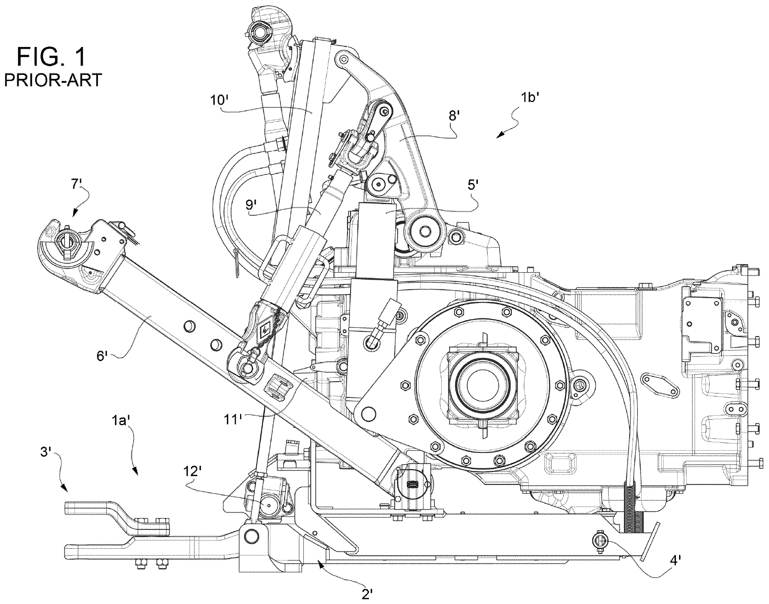

Briefly and making reference to figure 1, a known pick-up hitch assembly 1a' comprises a cassette 2' configured to carry in movable manner a first hitch point element 3'. Such cassette 2' is carried by tractor's body in a movable manner, usually by a hinge connection 4' realized in its inner portion with respect to the tractor. Accordingly, the first hitch point element 3' is carried on an outer portion opposed with respect to the inner portion and it is configured to move up and down according to the circumferential path defined by the aforementioned hinge connection 4'.

Further making reference to figure 1, a known lift assembly 1b' comprises a pair of hydraulic cylinders 5' having a first extremity connected to a cantilever arm 8' hinged at one extremity portion to an upper portion of the vehicle and a second extremity connected to the outer portion of the cassette 2'.

The lift assembly 1b' comprises two lateral arms 6', comprising a first portion hinged to the tractor's body and a second portion carrying respectively a second and a third hitch point elements 7' for further connecting the tractor with the trailer.

The two lateral arms 6' are furthermore connected to the cantilevered arm 8' via a mechanical tie rod 9' which is hinged in an intermediate position with respect to the extremities portions of each of the lateral arms 6' and the cantilevered arm 8'.

The pick up hitch assembly 1a' and the lift assembly 1b' are linked in some operational conditions via a pair of telescopic arms 10' hinged at their extremities to respectively a portion of cassette 2 comprised between hinge 4 and first hitch element 3' and to the extremity of the cantilevered arm 8' opposite to the one hinge to tractor's body.

In a first operational condition, cassette 2' is maintained fixed to tractors' body, e.g. thanks to a mechanical lock 12' and therefore the telescopic arms do not interfere with the normal movement of the operation of lifting cylinders 5.

In a second operational condition, mechanical lock 12' leaves cassette 2 moving and therefore, it is transported by telescopic arms 10' are configured to allow the movement of cassette 2' about hinge 4', in function of their extension or retraction with respect to cantilevered arm 8'.

Furthermore, even if not clearly visible from figure 1', the vehicle comprises a Power Take Off (PTO) 11' usually positioned in a substantially centered position with respect to telescopic arms10' and with respect to vehicle's body.

Accordingly to the preceding described geometry and as clearly shown in figure 1, such telescopic arms 10' are laterally comprised with respect to lateral arms 6' and are vertically spaced across all the extension of the pick-up hitch assembly 1'.

Therefore, it is undoubted that telescopic arms 10' occupy a consistent space in rear of the a tractor, reducing accessibility and freedom of operation in such an important area.

According to the above, the need is felt to provide a rear control assembly which can accomplish to all standard maneuvers of lateral lifting arms and pick-up hitch assembly via a reliable, compact, robust and economic control system.

An aim of the present invention is to satisfy the above mentioned needs in an economic and optimized manner.

### SUMMARY OF THE INVENTION

The aforementioned aim is reached by an agricultural vehicle comprising a pick-up hitch assembly as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic lateral view of a pick-up hitch assembly as known in the prior art;
- Figure 2 is a schematic lateral view of a pick-up hitch assembly according to the invention in a first operative configuration;
- Figure 3 is a schematic lateral view of a pick-up hitch assembly according to the invention in a second operative configuration;
- Figure 4 is a schematic lateral view of a pick-up hitch assembly according to the invention in a third operative configuration; and
- Figure 5 is a schematic lateral view of a portion of the pick-up hitch assembly according to the invention.

### DETAILED DESCRIPTION OF THE INVENTION

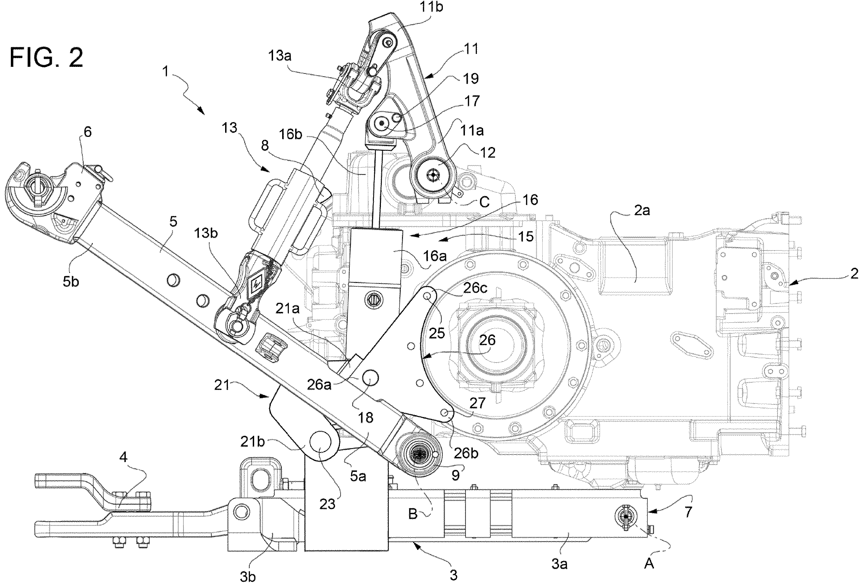

Figures 2 to 4 discloses an exemplarily embodiment of a rear connection assembly 1 according to the invention configured to connected a work vehicle 2, e.g. a tractor, to an trailer (not shown) to define a tractor-trailer combination. As per se known, pick-up hitch assembly 1 is carried by a vehicle's body 2a, preferably beneath the vehicle and more preferably in a rear side of this latter.

In particular, connection assembly 1 comprises a cassette 3 configured to carry a first hitch point element 4 and a pair of lateral arms 5 configured each to carry a respective coupling element 6. Hitch point elements may be of any typology, e.g. comprising drawbars, hooks or ball coupling elements and are configured to allow the connection of a corresponding mating element carried by the trailer.

In further detail, cassette 3 is a standard pick-up hitch cassette and has a substantially parallelepiped shape and is hinged at a rear portion 3a via a first hinge 7 underneath vehicle's body 2a and carry the first hitch point element 4 at a front portion 3b opposite with respect to the rear portion 4a. Accordingly, the first hitch point element 4 may move about a circumferential path about an axis A defined by first hinge 7.

Lateral arms 5 are known lifting assembly arms and each comprises an inner portion 5a connected to vehicle's body 2a via a second hinge 9 and an outer portion 5b, opposite with respect to the inner portion 5a. Accordingly, such lateral arms 5 may each move about a circumferential path about an axis B defined by second hinge 9.

Each lateral arm 5 is furthermore connected to a respective cantilever arm 11 connected to an upper portion of vehicle's body. In particular, each cantilever arm 11 comprises an inner portion 11a connected to vehicle's body 2a via a third hinge 12 and an outer portion 11b, opposite with respect to the inner portion 11a. The connection of each lateral arm 5 is realized between this latter and the outer portion 11b of the respective cantilever arm 11 via a connection element 13.

Furthermore, the movement about third hinge 12 of cantilever arm 11 is substantially free towards the opposite with respect to tractor's body 2, while it is limited on the opposite direction thanks to stop means 8, e.g. an abutment carried by tractor's body 2, into which the respective cantilever arm 11 may be supported when reached its maximum downwards extension.

The connection element 13 is preferably a mechanical damper comprising an upper portion 13a hinged with respect to the outer portion 11b and an inner portion 13b hinged with respect to the lateral arm 5 in an intermediate position between his inner and outer portions 5a, 5b. According to the described geometry, lateral arms 5 may be lowered or lifted according to the movement of outer portion 11b of cantilever arm 11 which follows a path around an axis C defined by third hinge 12. It is specified that connection element 13 simply connected, in a damped or non-damped way, the two elements but it is not an active actuator for moving lateral arms 5.

Indeed, rear connection assembly 1 further comprises actuation means 15 operatively interposed between each lateral arm 5 and the respective cantilever arm 11 and configured control the movement of lateral arms 5. In particular, actuation means 15 may comprise an actuator cylinder 16, better a hydraulic cylinder, comprising a casing 16a and a stem 16b.

The stem 16b of actuator cylinder 16 is connected in a terminal portion to cantilever arm 11 via fourth hinge 17 between its inner and outer portions 11a, 11b while the casing 16a of actuator cylinder 16 is connected via fith hinge 18 to a portion 2a of said vehicle 2 via the locking element 26. Advantageously, actuator cylinder 16 is a double acting cylinder.

Preferably, rear connection assembly 1 may comprise locking means 19 configured to lock fourth hinge 17, i.e. to rigidly couple the terminal portion of stem 16b with vehicle's body 2a. Preferably, locking means 19 are integrated into fourth hinge 17. Locking means may be alternatively mechanically actuated means, e.g. a pin to be inserted manually into a hole, or electrically/automatically actuated means, i.e. comprising an actuator controller by an electronic control unit to selectively lock or unlock fourth hinge 17.

According to a further aspect of the invention, the casing 16a of actuator cylinder 16 is furthermore connected in a terminal portion via fifth hinge 18 to cassette 3 in an intermediate position comprised between its rear and front portions 3a, 3b.

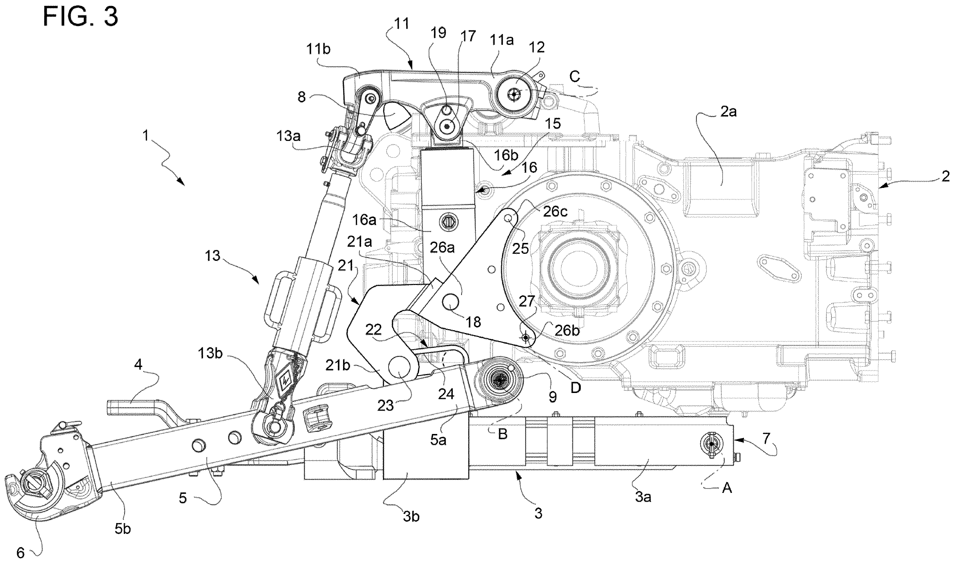

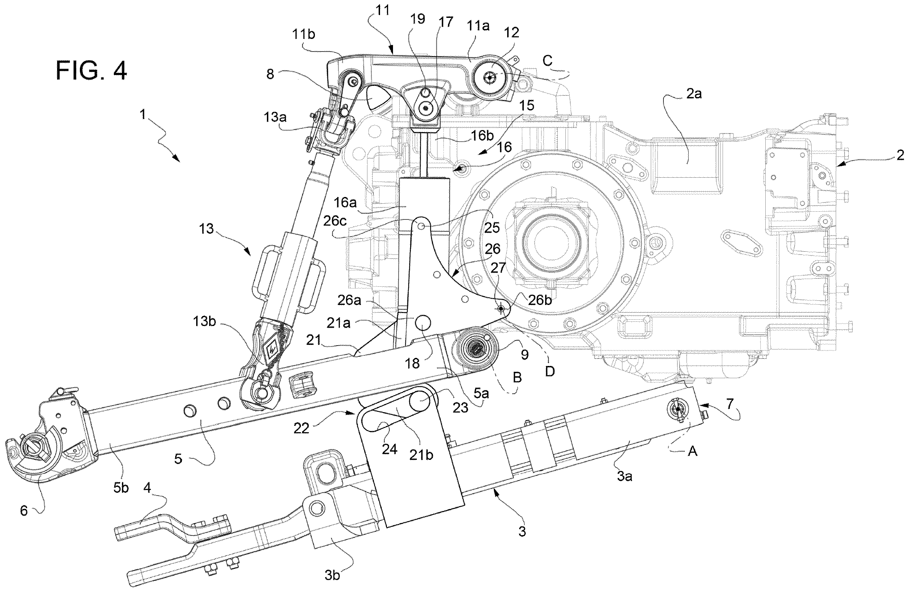

In particular, as better appreciated in figures 3 and 4, the connection of casing 16a to cassette 3 is realized via a joint element 21, e.g. flange having a predefined shape. Such joint element 21 essentially comprises a first portion 21a hinged to fifth hinge 18 and a second portion 21b coupled to cassette 3 via a mechanical coupling 22.

Preferably, the mechanical coupling 22 is realized between a pin 23 preferably carried by joint element 21 and a guide 24 realized carried by cassette 3. The guide 23 has a shape configured to compensate both horizontal and vertical displacement of joint element 21 during the movement defined hereinafter and linked to movement of cassette 3 with respect to vehicle's body 2a.

According to a further aspect of the invention, fifth hinge 18 comprises locking means 25 configured to lock fifth hinge 18, i.e. to rigidly couple the terminal portion of casing 16a to vehicle's body 2a. Similarly to what stated for locking means 19, also locking means 25 may be alternatively mechanically actuated means, e.g. a pin to be inserted manually into a hole, or electrically/automatically actuated means, i.e. comprising an actuator controller by an electronic control unit to selectively lock or unlock fifth hinge 18.

In the exemplarily described embodiment, locking means comprises a triangular element 26, e.g. a plate-like element comprising three vertexes 26a, 26b, 26c. A first vertex 26a is coupled to casing 16a via fifth hinge 18, a second vertex 26b is coupled to vehicle's body via a sixth hinge 27 and a third vertex 26c is selectively coupled to vehicle's body 2a via locking means 25. When the third vertex 26c is coupled, triangular element 26 cannot move with respect to vehicle's body, being fixed in second and third vertexes 26b, 26c; conversely, when third vertex 26c is uncoupled, triangular element 26 can move with respect to vehicle's body, since it can move about an axis D defined by sixth hinge 27 of second vertex 26b.

Advantageously, elements 21 and 26 are fixedly coupled together and, preferably, are realized as one piece.

The rear connection assembly 1 further comprises a control circuit (not shown) configured to control actuation means 15 and, when not actuated manually, locking means 19, 25. According to the described embodiment, the control circuit may comprise a hydraulic portion configured to control the actuator cylinder 16 and a hydraulic/pneumatic or electric portion configured to control locking means 19, 25.

The operation of the rear connection assembly 1 described above is the following.

In a first operation mode, both locking means 19 and 25 maintain fixed the position of actuator cylinder 26 and the position of cassette 3 and arms 5 is fixed.

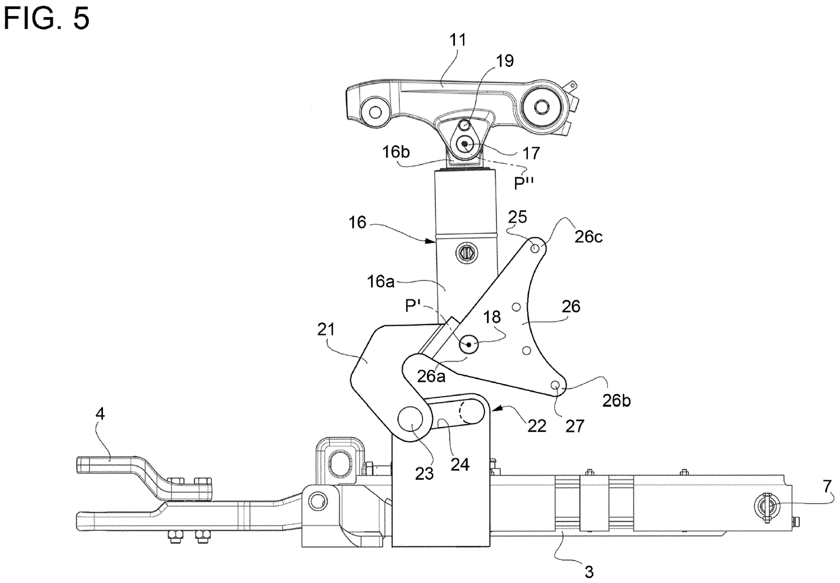

In a second operation mode, i.e. a lateral arms moving phase, locking means 25 lock element 26 with respect to vehicle's body. At the same time, locking means 19 maintain free the movement of fourth hinge 17. Accordingly, making reference to figure 5, current position P' of fifth hinge 18 cannot be modified and is maintained fixed by triangular element 26 which is fixed in vertexes 26b, 26c. Accordingly, a retraction or an expansion of actuator cylinder 16 can move only lateral arms 5 via cantilevered arm 11, thereby lowering or lifting second and lateral arms 5.

In a third operation mode, i.e. a cassette moving phase, when cylinder 5 is totally retracted and therefore cantilever arm 11 is supported on stop means 8 while locking means 25 allow movement of third vertex 26c of triangle element 26. It is noted that the weight of the system is sufficient to lock the position of the fourth hinge 17. However, advantageously, locking means 19 can be provided to definitively lock fourth hinge 17.

According to the above configuration, making reference to figure 5, current position P'' of fourth hinge 17 cannot be modified and is maintained fixed with respect to vehicle's body 2a; therefore also cantilevered arm 11 cannot move and lateral arms 5 consequently. Accordingly, a retraction or an expansion of actuator cylinder 16 can move joint element 21, which is linked to element 26 which can move freely about axis D sixth hinge 27. Thus, thanks to mechanical coupling 22, cassette 3, which is carried by joint element 21, can move about first hinge 7 thereby lowering or lifting first cassette 3, i.e. point hitch element 4, which can be furthermore be extracted or retracted by cassette 3, as per se known.

In view of the foregoing, the advantages of an agricultural vehicle comprising a pick-up hitch assembly 1 according to the invention are apparent.

First, the proposed pick-up hitch assembly 1 avoid the use of the long support rods as known in the known pick-up assemblies thereby decreasing its encumbrance.

Again, the control of the pick-up hitch element is simpler since only the actuator cylinder 16 can be controlled to regulate the movement of both lateral arms 5 and cassette 3. Furthermore such control can be implemented without the interference of the lift arms, differently from the prior art.

Furthermore, in view of the absence of support rods, the cantilevered arm can be realized shorter and lighter, thereby further reducing the dimension of the pick-up hitch assemblies and of cylinder actuator 16.

It is clear that modifications can be made to the described agricultural vehicle comprising a pick-up hitch assembly 1 which do not extend beyond the scope of protection defined by the claims.

For example, it is clear that the proposed described arrangement of pick-up hitch assembly is merely exemplarily and may comprise different elements and may have a different shape.

Exempli gratia, locking means 19, 25 may be realized both as triangular plate-like elements 26 or being realized with completely different means. Actuation means 15 may comprise a different element with respect to the described actuator cylinder 16 and, similarly, triangular element 26 or joint element 21 may have different shapes according to the typology and dimensions of the agricultural vehicle 2.

## Claims

1. Rear connection assembly (1) for an agricultural vehicle (2) comprising:
a cassette (3) connectable via a first hinge (7) to a portion (2a) of said vehicle (2) and configured to carry a first hitch point element (4);
a pair of lateral arms (5) each connectable via a second hinge (9) to said portion (2a) of said vehicle and each configured to carry respective further hitch point elements (6),
wherein said hitch point elements (4, 6) being configured to allow the connection with corresponding elements carried by a trailer in order to be trained by said vehicle,
a pair of cantilevered arms (11) connectable via a third hinge (12) to said portion (2a) of said vehicle and each positioned above the second hinge (9) of the respective lateral arms (5),
a pair of connection elements (13), each connection element (13) connecting a respective cantilevered arm (11) together with the corresponding lateral arm (5),
actuation means (15) interposed between each cantilevered arm (11) and the respective lateral arm (5),
wherein each actuation means (15) is connected via respective fourth and fifth hinges (17, 18) to the cantilevered arm (11) and the portion (2a)of said vehicle,
the assembly is **characterized in that** said rear connection assembly (1) further comprises locking means (8, 19, 25) for selectively locking the position of said fourth and fifth hinges (17, 18) with respect to said vehicle body (2a) and a joint element (21) connecting together said fifth hinge (18) to said cassette (3).

2. Assembly according to claim 1, wherein said actuation means (15) comprises an actuator cylinder (16) including a casing (16a) connected to one between said fourth and fifth hinges (17, 18) and a stem (16b) connected to the other between said fourth and fifth hinges (17, 18).

3. Assembly according to claim 1 or 2, wherein said locking means (8, 19, 25) are mechanical locking means.

4. Assembly according to claim 1 to 3, wherein said locking means (19, 25) are manually operable.

5. Assembly according to claim 1 to 3, wherein said locking means (19, 25) are controlled automatically.

6. Assembly according to any of the preceding claims, wherein said locking means (19, 25) are integrated in the respective fourth and fifth hinge (17, 18).

7. Assembly according to any of the preceding claims, wherein said locking means (8) comprises a stop element configured to be carried by vehicle body (2a).

8. Assembly according to any of the preceding claims, wherein said joint element (21) is connected to said cassette via a cam coupling (22).

9. Assembly according to claim 8, wherein said cam coupling (22) comprises a pin (23) carried by one between said joint element (21) and said cassette (3) configured to slide into a guide (24) realized in the other between said joint element (21) and said cassette (3).

10. Assembly according to any of the preceding claims, wherein at least one of said fourth and fifth hinges (17, 19) comprises a locking element (26) provided with three vertexes (26a, 26b, 26c), a first vertex (26a) being coupled to said fifth hinge (19), a second vertex (26b) being coupled via a sixth hinge (27) to said vehicle's body (2a) and a third vertex (26c) being selectively fixed to said vehicle's body.

11. Assembly according to claim 10, wherein said locking element (26) is coupled to said joint element (21).

12. Assembly according to any of the preceding claims, comprising stop means (8) configured to be carried by said vehicle body (2a), each stop means (8) being configured to delimitate a downward movement of said cantilevered arms (11) and to support this latter in such downward stop position.

13. Agricultural vehicle (2) including a body (2a) and comprising a rear connection assembly (1) connected to said vehicle's body (2a) according to any of the preceding claims.

## Patentansprüche

1. Heck-Verbindungsanordnung (1) für ein landwirtschaftliches Fahrzeug (2) mit:
einer Kassette (3), die über ein erstes Gelenk (7) mit einem Abschnitt (2a) des Fahrzeugs (2) verbindbar ist und die dazu eingerichtet ist, ein erstes Anhängepunktelement (4) zu tragen;
einem Paar von lateralen Armen (5), die jeweils über ein zweites Gelenk (9) mit dem Abschnitt (2a) des Fahrzeugs verbindbar sind und die jeweils dazu eingerichtet sind, ein entsprechendes weiteres Anhängepunktelement (6) zu tragen,
wobei die Anhängepunktelemente (4, 6) dazu eingerichtet sind, die Verbindung mit entsprechenden Elementen, die von einem Anhänger getragen werden, zu ermöglichen, um von dem Fahrzeug gezogen zu werden,
einem Paar von Kragarmen (11), die über ein drittes Gelenk (12) mit dem Abschnitt (2a) des Fahrzeugs verbindbar sind und die jeweils über dem zweiten Gelenk (9) der jeweiligen lateralen Arme (5) angeordnet sind,
einem Paar von Verbindungselementen (13), wobei jedes Verbindungselement (13) einen entsprechenden Kragarm (11) mit dem entsprechenden lateralen Arm (5) verbindet,
Betätigungsmitteln (15), die zwischen jedem Kragarm (11) und dem jeweiligen lateralen Arm (5) eingefügt sind,
wobei jedes Betätigungsmittel (15) über ein jeweiliges viertes und ein fünftes Gelenk (17, 18) mit dem Kragarm (11) und dem Abschnitt (2a) des Fahrzeugs verbunden ist,
wobei die Anordnung **dadurch gekennzeichnet ist, dass** die Heck-Verbindungsanordnung (1) des Weiteren Sperrmittel (8, 19, 25) zum wahlweisen Sperren der Position des vierten und des fünften Gelenks (17, 18) bezüglich des Fahrzeugaufbaus (2a) aufweist und wobei ein Gelenkelement (21) das fünfte Gelenk (18) und die Kassette (3) miteinander verbindet.

2. Anordnung nach Anspruch 1, wobei die Betätigungsmittel (15) einen Betätigungszylinder (16) umfassen, der ein Gehäuse (16a), das mit einem aus dem vierten und dem fünften Gelenk (17, 18) verbunden ist, und eine Stange (16b) umfasst, die mit dem anderen aus dem vierten und dem fünften Gelenk (17, 18) verbunden ist.

3. Anordnung nach Anspruch 1 oder 2, wobei die Sperrmittel (8, 19, 25) mechanische Sperrmittel sind.

4. Anordnung noch einem der Ansprüche 1 bis 3, wobei die Sperrmittel (19, 25) manuell betätigbar sind.

5. Anordnung nach einem der Ansprüche 1 bis 3, wobei die Sperrmittel (19, 25) automatisch gesteuert sind.

6. Anordnung nach einem der vorhergehenden Ansprüche, wobei die Sperrmittel (19, 25) in das entsprechende vierte und fünfte Gelenk (17, 18) integriert sind.

7. Anordnung nach einem der vorhergehenden Ansprüche, wobei die Sperrmittel (8) ein Anschlagelement umfassen, das dazu eingerichtet ist, von dem Fahrzeugaufbau (2a) getragen zu werden.

8. Anordnung nach einem der vorhergehenden Ansprüche, wobei das Gelenkelement (21) über eine Nockenkupplung (22) mit der Kassette verbunden ist.

9. Anordnung nach Anspruch 8, wobei die Nockenkupplung (22) einen Bolzen (23) umfasst, der von einem aus dem Gelenkelement (21) und der Kassette (3) gelagert ist und der dazu eingerichtet ist, in eine Führung (24) zu gleiten, die in dem anderen aus dem Gelenkelement (21)und der Kassette (3) vorgesehen ist.

10. Anordnung nach einem der vorhergehenden Ansprüche, wobei zumindest eines aus dem vierten und dem fünften Gelenk (17, 19) ein Sperrelement (26) aufweist, das mit drei Eckpunkten (26a, 26b, 26c) versehen ist, wobei ein erster Eckpunkt (26a) mit dem fünften Gelenk (19) gekoppelt ist, ein zweiter Eckpunkt über ein sechstes Gelenk (27) mit dem Fahrzeugaufbau (2a) gekoppelt ist und ein dritter Eckpunkt (26c) wahlweise an dem Fahrzeugaufbau befestigt ist.

11. Anordnung nach Anspruch 10, wobei das Sperrelement (26) mit dem Gelenkelement (21) gekoppelt ist.

12. Anordnung nach einem der vorhergehenden Ansprüche, das Anschlagmittel (8) aufweist, die dazu eingerichtet sind, von dem Fahrzeugaufbau (2a) getragen zu werden, wobei jedes Anschlagmittel (8) dazu eingerichtet ist, eine Abwärtsbewegung der Kragarme (11) zu begrenzen und die letzteren in einer solchen Abwärtsposition abzustützen.

13. Landwirtschaftliches Fahrzeug (2), das einen Aufbau (2a) umfasst und das eine Heck-Verbindunganordnung (1) nach einem der vorhergehenden Ansprüche umfasst, die mit dem Fahrzeugaufbau (2) verbunden ist.

## Revendications

1. Ensemble de raccordements arrière (1) pour un véhicule agricole (2) comprenant :
une cassette (3) pouvant être raccordée par le biais d'une première charnière (7) à une partie (2a) dudit véhicule (2) et configurée pour porter un premier élément de point d'attache (4) ;
une paire de bras latéraux (5), chacun pouvant être raccordé par le biais d'une deuxième charnière (9) à ladite partie (2a) dudit véhicule et chacun étant configuré pour porter d'autres éléments de point d'attache (6) respectifs,
dans lequel lesdits éléments de point d'attache (4, 6) sont configurés pour permettre le raccordement à des éléments correspondants portés par une remorque afin d'être entraînés par ledit véhicule,
une paire de bras en porte-à-faux (11) pouvant être raccordés par le biais d'une troisième charnière (12) à ladite partie (2a) dudit véhicule et positionnés chacun au-dessus de la deuxième charnière (9) des bras latéraux (5) respectifs,
une paire d'éléments de raccordement (13), chaque élément de raccordement (13) raccordant un bras en porte-à-faux respectif (11) au bras latéral (5) correspondant,
des moyens d'actionnement (15) interposés entre chaque bras en porte-à-faux (11) et le bras latéral (5) correspondant,
dans lequel chaque moyen d'actionnement (15) est raccordé par le biais des quatrième et cinquième charnières (17, 18) au bras en porte-à-faux (11) et à la partie (2a) dudit véhicule,
l'ensemble est **caractérisé en ce que** ledit ensemble de raccordements arrière (1) comprend en outre des moyens de verrouillage (8, 19, 25) pour verrouiller de manière sélective la position desdites quatrième et cinquième charnières (17, 18) par rapport à ladite carrosserie (2a) du véhicule et un élément de raccordement (21) raccordant ladite cinquième charnière (18) à ladite cassette (3).

2. Ensemble selon la revendication 1, dans lequel ledit moyen d'actionnement (15) comprend un vérin de commande (16) incluant un carter (16a) raccordé à l'une parmi lesdites quatrième et cinquième charnières (17, 18) et une tige (16b) raccordée à l'autre parmi lesdites quatrième et cinquième charnières (17, 18).

3. Ensemble selon la revendication 1 ou la revendication 2, dans lequel lesdits moyens de verrouillage (8, 19, 25) sont des moyens de verrouillage mécaniques.

4. Ensemble selon les revendications 1 à 3, dans lequel lesdits moyens de verrouillage (19, 25) peuvent être actionnés manuellement.

5. Ensemble selon les revendications 1 à 3, dans lequel lesdits moyens de verrouillage (19, 25) sont commandés automatiquement.

6. Ensemble selon l'une quelconque des revendications précédentes, dans lequel lesdits moyens de verrouillage (19, 25) sont intégrés dans la quatrième et la cinquième charnière (17, 18) respectives.

7. Ensemble selon l'une quelconque des revendications précédentes, dans lequel lesdits moyens de verrouillage (8) comprennent un élément d'arrêt configuré pour être porté par ladite carrosserie (2a) du véhicule.

8. Ensemble selon l'une quelconque des revendications précédentes, dans lequel ledit élément de raccordement (21) est raccordé à ladite cassette par le biais d'un attelage à came (22).

9. Ensemble selon la revendication 8, dans lequel ledit attelage à came (22) comprend une broche (23) portée par l'un parmi ledit élément de raccordement (21) et ladite cassette (3) configurée pour coulisser dans un guide (24) réalisé dans l'autre parmi ledit élément de raccordement (21) et ladite cassette (3).

10. Ensemble selon l'une quelconque des revendications précédentes, dans lequel au moins l'une desdites quatrième et cinquième charnières (17, 19) comprend un élément de verrouillage (26) pourvu de trois sommets (26a, 26b, 26c), un premier sommet (26a) étant couplé à ladite cinquième charnière (19), un deuxième sommet (26b) étant couplé par le biais d'une sixième charnière (27) à ladite carrosserie (2a) du véhicule et un troisième sommet (26c) étant fixé de manière sélective à ladite carrosserie du véhicule.

11. Ensemble selon la revendication 10, dans lequel ledit élément de verrouillage (26) est couplé audit élément de raccordement (21).

12. Ensemble selon l'une quelconque des revendications précédentes, comprenant des moyens d'arrêt (8) configurés pour être portés par ladite carrosserie (2a) du véhicule, chaque moyen d'arrêt (8) étant configuré pour délimiter un mouvement vers le bas desdits bras en porte-à-faux (11) et pour soutenir ces derniers dans cette position d'arrêt vers le bas.

13. Véhicule agricole (2) incluant une carrosserie (2a) et comprenant un ensemble de raccordements arrière (1) raccordé à ladite carrosserie (2a) du véhicule selon l'une quelconque des revendications précédentes.
